# FASCICULE DE BREVET EUROPEEN

(11) **EP 0 515 937 B1**
(45) Date de publication et mention de la délivrance du brevet: **16.08.1995**
(21) Numéro de dépôt: 92108306.9
(22) Date de dépôt: 16.05.1992
(51) Int. Cl.: A61C 13/265, A61C 8/00

(54) **Dispositif d'accouplement pour prothèse dentaire**
Kupplungsvorrichtung für Zahnprothesen
Coupling device for dental prosthesis

(30) Priorité: 28.05.1991 CH 1579/91
(43) Date de publication de la demande: 02.12.1992
(73) Titulaire: METAUX PRECIEUX SA METALOR, CH-2000 Neuchâtel 9 (CH)
(72) Inventeur: Graub, Walter, CH-2513 Twann (CH)
(74) Mandataire: Micheli & Cie

(56) Documents cités:
- EP-A- 0 298 909
- WO-A-87/06816
- CH-A- 650 662
- CH-A- 674 926
- FR-E- 71 467

## Description

Pour la fixation de prothèses dentaires amovibles il existe de nombreux systèmes faisant appel généralement à des accouplements du type bouton-pression dont une partie, généralement la partie mâle, est fixée sur la mâchoire du patient soit dans l'os, soit dans une dent valide, et dont l'autre partie, la partie femelle, est fixée dans la prothèse. De tels dispositifs d'accouplement sont par exemple décrits dans les brevets CH 646.046; CH 646.047; CH 651.462 et CH 651.194.

La plupart de ces dispositifs présentent l'inconvénient d'une fixation trop rigide de la prothèse en bouche, de sorte que sous l'effet des chocs et des efforts dûs au masticage des aliments il est fréquent qu'à la longue le scellement des parties mâles implantées dans une dent saine ou dans la mâchoire est ébranlé, voire détruit.

Dans le dispositif décrit dans le brevet CH 597.843, un cavalier de fixation déformable élastiquement est inséré entre les parties mâle et femelle de l'accouplement donnant une certaine souplesse à la fixation de la prothèse. Toutefois lors de la mise en place et du retrait de cette prothèse la déformation élastique de ce cavalier transmet des efforts importants sur la prothèse. Ces efforts importants nécessitent la prévision de parois importantes et très solides de la prothèse pour éviter sa détérioration ce qui alourdit et augmente l'encombrement en bouche des prothèses.

Il existe encore d'autres types d'accouplement permettant une fixation amovible d'une prothèse avec un certain degré de souplesse qui utilisent des éléments d'accouplement mâle ou femelle en deux parties élastiquement déformables l'une par rapport à l'autre. L'inconvénient de ces dispositifs est que les vides et espaces compris entre ces deux parties se remplissent de détritus et de tartre entraînant une mauvaise hygiène de la bouche et un mauvais fonctionnement de l'accouplement.

Le brevet CH 674.926 décrit un accouplement pour prothèse dentaire amovible qui comporte un organe de rétention fixé en bouche dont une extrémité est formée par une tige filetée tandis que l'autre se présente sous la forme d'une portion de sphère et une matrice comprenant un boîtier rigide renfermant une masse déformable élastiquement munie d'un évidement destiné à recevoir la partie sphérique de l'organe de rétention. Cette matrice présente des moyens pour sa fixation rigide et à demeure dans une prothèse.

L'inconvénient de ce type d'accouplement réside principalement dans le fait que la masse déformable élastiquement s'use rapidement et que ses caractéristiques se modifient en vieillissant en bouche.

La présente invention a pour objet un accouplement pour prothèses dentaires amovibles du type de celui décrit dans le brevet CH 674.926, mais qui en élimine l'inconvénient majeur. Cet accouplement pour prothèses dentaires amovibles se distingue par les caractéristiques énumérées à la revendication 1.

Le dessin annexé illustre schématiquement et à titre d'exemple deux formes d'exécution du dispositif d'accouplement d une prothèse dentaire amovible.

La figure 1 illustre en vue la partie mâle de l'accouplement et en coupe la partie femelle de l'accouplement, en position accouplée, d'une première forme d'exécution de l'accouplement.

La figure 2 illustre en perspective une bague de rétention de la partie femelle de l'accouplement illustrée à la figure 1.

La figure 3 illustre en perspective la partie mâle d'une seconde forme d'exécution de l'accouplement.

La figure 4 illustre en perspective la partie femelle de la seconde forme d'exécution de l'accouplement.

La figure 5 illustre en perspective une troisième forme d'exécution de la partie femelle de l'accouplement.

Les figures 6 et 7 illustrent des pièces constitutives de la partie femelle illustrée à la figure 5.

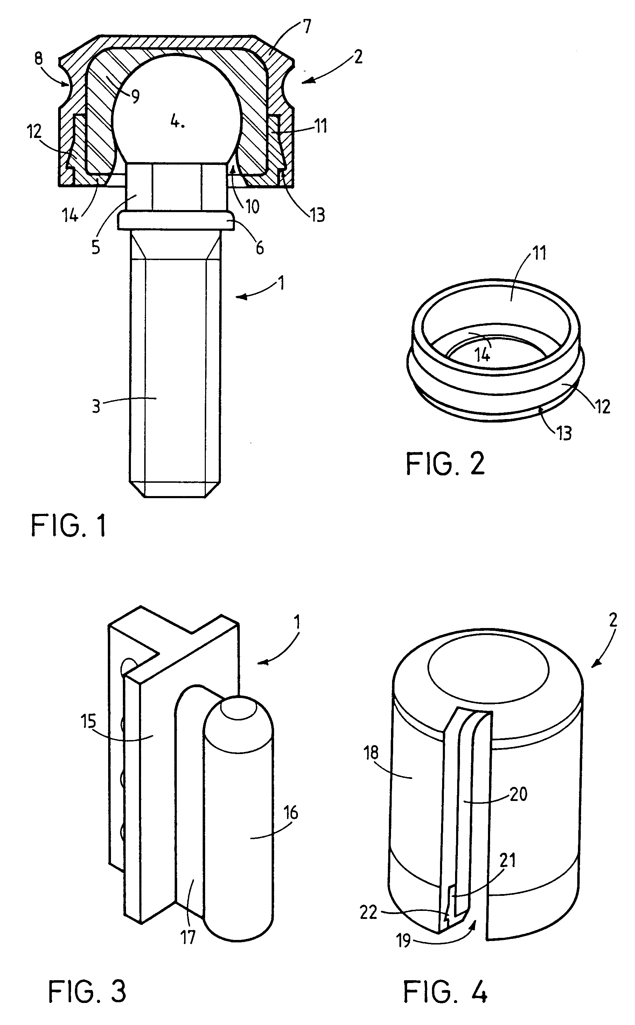

La première forme d'exécution du dispositif d'accouplement pour prothèses dentaires amovibles illustrée aux figures 1 et 2 comporte une partie mâle 1 et une partie femelle 2.

La partie mâle 1 de l'accouplement présente une tige filetée 3 à l'une de ses extrémités et à son autre extrémité une partie sphérique 4 reliée à la tige filetée 3 par une zone polygonale 5 et une colerette 6. La zone polygonale 5 sert d'écrou pour visser la tige filetée 3 dans une dent, une racine ou l'os de la mâchoire du patient.

La partie femelle 2 de l'accouplement présente un boîtier 7 comportant des fixations de retenue 8, ici une gorge circulaire, permettant l'incorporation du boîtier dans la masse moulée d'une prothèse dentaire, non illustrée. Ce boîtier renferme une masse en matière synthétique déformable 9 présentant un logement sphérique débouchant sur la face ouverte du boîtier 7 par une ouverture 10 comportant un rétrécissement, d'un diamètre inférieur à celui du logement sphérique. Ce logement sphérique présente un diamètre correspondant à celui de la partie terminale sphérique 4 de la partie mâle 1.

Lorsque l'accouplement est en position de service, figure 1, la partie sphérique 4 est fermement maintenue dans le logement de la masse déformable 9.

Cette masse déformable 9 est maintenue en position de service dans le boîtier 7 à l'aide d'une bague de maintien 11 en matière synthétique comportant une saillie circulaire 12 venant en position de service s'encliqueter sous l'épaulement 13 de la paroi interne du boîtier 7. Cette bague comporte une partie annulaire 14 maintenant fermement la masse déformable 9 dans le boîtier en position de service.

Les parties mâle 1 et femelle 3 de cet accouplement peuvent être accouplées et désaccouplées facilement en introduisant ou retirant la partie sphérique 4 dans ou hors du logement correspondant de la masse déformable 9, généralement en matière synthétique, par déformation élastique de celle-ci. L'élasticité et/ou la dureté de cette masse déformable élastiquement 9 sont calculées et ajustées pour obtenir la forme de rétention désirée.

Une bague de protection, non illustrée, peut prendre appui sur la colerette 6 et la face externe de la partie annulaire 14 de cette bague 11 évitant toute souillure de l'ouverture 10 par des aliments.

L'intérêt de cette solution réside dans le fait que lorsque la masse en matière synthétique déformable élastiquement, seule partie de l'accouplement susceptible de s'user ou de veillir, est usée ou déformée par le fonctionnement normal de l'accouplement il suffit de retirer la bague 11 et cette masse 9 du boîtier 7 et d'y introduire une nouvelle masse 9 maintenue généralement par une nouvelle bague 11 pour que l'accouplement soit remis à neuf à moindre frais, sans intervention sur la prothèse elle-même.

La seconde forme d'exécution (fig. 3 et 4) de l'accouplement comporte une partie mâle 1, comportant un support 15 destiné à être cimenté dans une dent du patient d'où émerge un organe d'accouplement formé par un cylindre 16 relié au support 15 par une nervure 17.

La partie femelle 2 de cet accouplement comporte un boîtier 18 destiné à être fixé rigidement, ou incorporé dans une prothèse dentaire amovible de forme générale cylindrique présentant un évidement central et une fente latérale 19. Un manchon cylindrique 20 en matière synthétique déformable est disposé dans l'évidement du boîtier et est maintenu en position de service par une bague de rétention 21. Cette bague de rétention est fendue, sa fente correspond à celle 19 du boîtier 18, et comporte une formation d'encliquetage 22 coopérant avec une formation correspondante du boîtier 18.

Le diamètre interne du manchon 20 est inférieur ou égal au diamètre externe de la partie cylindrique 16. La partie femelle 2 peut donc être introduite sur la partie mâle 1, la nervure 17 passant dans la fente 19 et le cylindre 16 venant se loger dans le manchon 20.

Dans cette forme d'exécution, la force de rétention entre les deux parties de l'accouplement est obtenue par la force de friction entre le manchon 20 et le cylindre 16.

Ici également le manchon 20 est interchangeable facilement, augmentant à l'infini la durée de vie d'un tel accouplement.

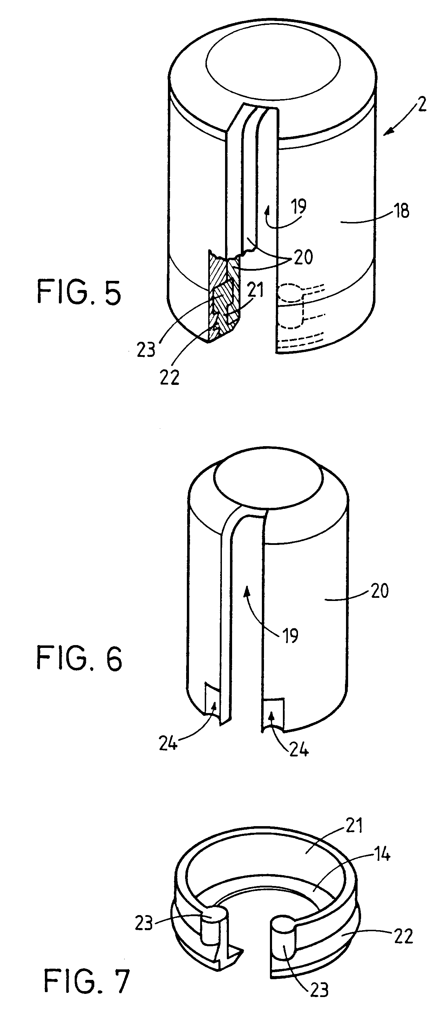

Les figures 5 à 7 illustrent une variante de la partie femelle 2 de l'accouplement illustré aux figures 3 et 4 et ses parties constitutives, le manchon 20 et la bague de rétention amovible 21.

Dans cette exécution, la bague de rétention 21 comporte encore des formations de blocage 23 coopérant en position de service simultanément avec des formations correspondantes 24 du manchon 20 et du boîtier 18. Ainsi, la position angulaire de service du manchon 20 et de la bague 21 est fixée.

L'immense avantage de cet accouplement pour prothèse dentaire amovible est de permettre une utilisation illimitée de la prothèse sans nécessiter de retoucher à cette pièce délicate. Le simple échange ou remplacement de la masse déformable élastique 9, 20 permet de remettre à neuf un accouplement usé.

## Revendications

1. Accouplement pour prothèse dentaire amovible comportant un organe mâle (1) dont une extrémité est formée par une tige filetée (3), tandis que l'autre se présente sous la forme d'un organe d'accouplement mâle (4, 16) et une partie femelle (2) comportant un boîtier (7) rigide destiné à être fixé dans la prothèse renfermant une masse (9) déformable élastiquement munie d'un évidement (10) destiné à recevoir l'organe d'accouplement mâle de la partie mâle, caractérisé par le fait que cette masse élastiquement déformable est maintenue dans le boîtier par l'intermédiaire d'une bague (11) amovible clipsée sur ledit boîtier de sorte que le remplacement de cette masse se fait sans intervention sur la prothèse dans laquelle est fixée ledit boîtier.

2. Accouplement selon la revendication 1 caractérisé par le fait que l'organe d'accouplement mâle est constitué par une partie de sphère (4) coopérant avec un évidement de forme correspondante de la masse déformable élastiquement, cet évidement présentant une ouverture dont le diamètre est inférieur au diamètre de ladite portion de sphère.

3. Accouplement selon la revendication 1, caractérisé par le fait que l'organe mâle d'accouplement est constitué par un cylindre (16) relié par une nervure (17) à un support (15) et par le fait que la partie femelle de l'accouplement comporte un manchon cylindrique (20) en matière élastiquement déformable, maintenue à l'aide d'une bague (21) fendue dans le boîtier de la partie femelle de l'accouplement.

4. Accouplement selon la revendication 3, caractérisé par le fait que la force de rétention de l'accouplement est déterminée par les forces de friction existant entre le manchon et le cylindre.

5. Accouplement selon la revendication 3 ou la revendication 4, caractérisé par le fait que la bague femelle comporte des formations de blocage (23) coopérant avec des formations (24) correspondantes du boîtier et du manchon et fixant sa position angulaire de service par rapport à ces deux pièces.

## Claims

1. Coupling for removable dental prothesis comprising a male member (1) one end of which is consituted by a threaded rod (3), whereas the other presents the shape of a male coupling member (4, 16) and a female portion (2) comprising a rigid casing (7) intended to be fixed into the prothesis which houses a resiliently deformable mass (9) provided with a housing (10) intended to receive the male coupling member of the male portion, characterized by the fact that this resiliently deformable mass is maintained in the casing through the intermediary of a removable ring (11) clipsed on the said casing so that the replacement of this mass is made without any intervention onto the prothesis in which the said casing is fixed.

2. Coupling according to claim 1, characterized by the fact that the male coupling member is constituted by a part of a sphere (4) cooperating with the housing of corresponding shape of the resiliently deformable mass, this housing presenting an opening the diameter of which is less than the diameter of the said sphere portion.

3. Coupling according to claim 1, characterized by the fact that the male coupling member is constituted by a cylinder (16) connecting through a rib (17) to a support (15) and by the fact that the female portion of the coupling comprises a cylindrical sleeve (20) made in resiliently deformable material maintained within the casing of the female portion of the coupling by means of a slottered ring (21).

4. Coupling according to claim 3, characterized by the fact that the retention force of the coupling is determined by the friction forces existing between the sleeve and the cylinder.

5. Coupling according to claim 3 or claim 4, characterized by the fact that the female ring comprises locking formations (23) cooperating with corresponding formations (24) of the casing and of the sleeve and fixing its angular service position with respect to these two parts.

## Patentansprüche

1. Kupplungsvorrichtung für eine entfernbare Zahnprothese mit einem männlichen Teil (1), dessen eines Ende durch eine Gewindespindel (3) gebildet wird, währenddem das andere Ende die Form eines männlichen Kupplungsorgans (4, 16) aufweist, und mit einem weiblichen Teil (2), der ein starres Gehäuse (7) aufweist, welches dazu bestimmt ist, in der Prothese befestigt zu werden, und eine elastisch deformierbare Masse (9) einschliesst, die mit einer Ausnehmung (10) versehen ist, welche dazu bestimmt ist, das männliche Kupplungsorgan aufzunehmen, gekennzeichnet durch die Tatsache, dass diese elastisch deformierbare Masse mittels eines entfernbaren Ringes (11) im Gehäuse gehalten wird, welcher Ring auf dem benannten Gehäuse derart angeklippt ist, dass das Auswechseln dieser Masse ohne Eingriff auf die Prothese geschieht, in welcher das benannte Gehäuse befestigt ist.

2. Vorrichtung nach Anspruch 1, durch die Tatsache gekennzeichnet, dass das männliche Kupplungsorgan durch einen Kugelteil (4) gebildet wird, der mit der eine entsprechende Form aufweisenden Ausnehmung der elastisch deformierbaren Masse zusammenwirkt, wobei diese Ausnehmung eine Öffnung aufweist, deren Durchmesser geringer ist wie der Durchmesser des benannten Kugelteils.

3. Vorrichtung nach Anspruch 1, durch die Tatsache gekennzeichnet, dass das männliche Kupplungsorgan durch einen Zylinder (16) gebildet wird, der über eine Rippe (17) mit einem Sockel (15) verbunden ist, und dass der weibliche Teil der Kupplungsvorrichtung eine zylindrische Buchse (20) aus elastisch deformierbarem Material besitzt, welche Buchse im Gehäuse des weiblichen Teiles der Kupplungsvorrichtung dank eines gespaltenen Ringes (21) gehalten wird.

4. Vorrichtung nach Anspruch 3, durch die Tatsache gekennzeichnet, dass die Zurückhaltungskraft der Kupplunsvorrichtung durch die zwischen der Buchse und dem Zylinder bestehende Reibungskraft bestimmt wird.

5. Vorrichtung nach Anspruch 3 oder Anspruch 4, durch die Tatsache gekennzeichnet, dass der weibliche Ring Verriegelungsausbildungen (23) aufweist, die mit entsprechenden Ausbildungen (24) des Gehäuses und der Buchse zusammenwirken und die ihre Winkelbetriebslage gegenüber diesen zwei Teilen festlegen.
